# EUROPÄISCHE PATENTSCHRIFT

(11) **EP 1 007 911 B1**
(45) Veröffentlichungstag und Bekanntmachung des Hinweises auf die Patenterteilung: **14.11.2001**
(21) Anmeldenummer: 97918994.1
(22) Anmeldetag: 23.08.1997
(51) Int. Cl.: G01F 1/78, G01F 11/02, G01G 17/04

(54) **ANORDNUNG UND VERFAHREN ZUR BESTIMMUNG DER FÖRDERMENGE ODER DES MASSENSTROMS VON MITTELS EINER KOLBENDICKSTOFFPUMPE TRANSPORTIERTEM FÖRDERGUT**
METHOD AND DEVICE TO DETERMINE DELIVERY RATE OR MASS FLOW RATE OF MATERIAL CONVEYED BY A HIGH DENSITY LIQUID PISTON PUMP
DISPOSITIF ET PROCEDE POUR LA DETERMINATION DU DEBIT D'EXTRACTION OU DU DEBIT MASSIQUE DE MATIERES EXTRAITES A TRANSPORTER AU MOYEN D'UNE POMPE A PISTON POUR LIQUIDES EPAIS

(30) Priorität: 22.10.1996 DE 19643491
(43) Veröffentlichungstag der Anmeldung: 14.06.2000
(73) Patentinhaber: PUTZMEISTER Aktiengesellschaft, 72631 Aichtal (DE)
(72) Erfinder: ZEY, Wolfgang, D-72800 Eningen (DE)
(74) Vertreter: Wolf, Eckhard, Dr.-Ing.
(86) Internationale Anmeldenummer: EP9704601
(87) Internationale Veröffentlichungsnummer: WO9817979

(56) Entgegenhaltungen:
- EP-A- 0 297 329
- EP-A- 0 335 058
- WO-A-94/05980
- US-A- 5 335 552

## Beschreibung

Die Erfindung betrifft eine Anordnung zur Bestimmung der Fördermenge oder des Massenstroms von mittels einer mindestens einen Förderzylinder und Förderkolben aufweisenden Kolbendickpumpe durch eine Förderleitung transportiertem Fördergut. Der Förderzylinder wird während eines Füllhubs (Saughub) mit Fördergut beispielsweise aus einem Materialaufgabebehälter gefüllt und während eines Druckhubs unter Verdrängen des Förderguts in die Förderleitung entleert.

Vor allem bei Dickstoffpumpen, die in einen verfahrenstechnischen Prozeß eingebunden sind, besteht ein Bedarf, den Massenstrom zu messen und zu dokumentieren und den Meßwert gegebenenfalls als Stellgröße für vor- oder nachgeschaltete Anlagenteile in einen Regelkreis einzubeziehen. Dies ist beispielsweise bei der Förderung von Klärschlamm für die Klärschlammverbrennung der Fall.

Bekannt sind Volumenzähler in Form von Ovalradzählern für Newtonsche Flüssigkeiten, die als "Motor" in die Förderleitung eingebaut werden und bei denen ein Volumenrad als Folge des Pumpvorgangs in Drehung versetzt. Über eine Impulsscheibe werden die Umdrehungen des Volumenrades aufaddiert und in einer Auswerteeinheit aufgrund des bekannten Verdrängervolumens in einen Volumenstrom umgerechnet.

Weiter ist es bei Zweizylinder-Dickstoffpumpen bekannt, den Förderstrom bei definiertem Verdrängungsvolumen der Dickstoffpumpe aus einer Hubzählung zu bestimmen. Bei dieser Meßmethode muß der Füllgrad der Dickstoffpumpe geschätzt werden. Deshalb kann das Ergebnis als Folge einer sich ändernden Konsistenz der Dickstoffe stark schwanken. Um diesen Nachteil zu vermeiden, wurde vorgeschlagen (DE-A-40 35 515), den Füllgrad der Zylinder bei jedem Hub mit Hilfe der unterschiedlichsten Indikatoren zu bestimmen. Auch diese Methode hat sich für viele Anwendungen als zu ungenau erwiesen, da für die Bestimmung des allein interessierenden Massenstroms zusätzlich die Dichte des Förderguts bekannt sein muß, die je nach Konsistenz der Dickstoffe großen Schwankungen unterliegt.

Ausgehend hiervon liegt der Erfindung die Aufgabe zugrunde, eine Anordnung und ein Verfahren zur Bestimmung der Fördermenge oder des Massenstroms der eingangs angegebenen Art zu entwickeln, womit auch bei schwankendem Füllgrad der Förderzylinder und bei in weiten Grenzen variabler Konsistenz des Förderguts eine genaue Messung möglich ist.

Zur Lösung dieser Aufgabe werden die in den Ansprüchen 1 und 15 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht verfahrensmäßig von dem Gedanken aus, daß der Förderzylinder vor der Ausführung eines jeden Füllhubs und vor der Ausführung eines jeden Druckhubs gewogen und aus der Differenz der Wiegeergebnisse die jeweilige Füllmenge bestimmt wird und daß die Zykluszeit eines jeden Hubzyklus gemessen und unter Berücksichtigung der gemessenen Füllmengen zur rechnerischen Bestimmung der Fördermenge oder des Massenstroms ausgewertet wird.

Um dies zu ermöglichen, wird in baulicher Hinsicht vorgeschlagen, daß der Förderzylinder in einem Gehäuse mit radialem und axialem Spiel angeordnet und an mindestens einer gehäusefest angeordneten Wägezelle aufgehängt ist. Die Wägezelle ermöglicht vor allem in den Umkehrphasen des Förderkolbens vor der Ausführung des Füllhubs und vor der Ausführung des Druckhubs eine exakte Massenbestimmung des leeren und des vollen Förderzylinders einschließlich Förderkolben, so daß jeweils durch Differenzbildung die Füllmenge bestimmt werden kann.

Zur Vermeidung von die Meßgenauigkeit störenden Kräften wird gemäß einer bevorzugten Ausgestaltung der Erfindung vorgeschlagen, daß zumindest der im Förderzylinder geführte Teil des Förderkolbens relativ zum Gehäuse mit radialem Spiel aufgehängt ist. Dies kann dadurch erreicht werden, daß der Förderkolben an seiner Kolbenstange mit radialem Spiel vorzugsweise kardanisch aufgehängt ist und/oder daß der Förderkolben gegenüber dem Gehäuse oder seiner Kolbenstange elastisch aufgehängt ist.

Eine weitere bevorzugte Ausgestaltung der Erfindung sieht vor, daß das Gehäuse als den Förderzylinder außenseitig umfassendes Rundrohr oder Mehrkantrohr ausgebildet ist und daß an der Oberseite des Gehäuses zwei Wägezellen in axialem Abstand voneinander angeordnet sind. Die Wägezellen sind dabei zweckmäßig an einem gehäusefesten Lagerpodest angeordnet und weisen einen mit einem Dehnmeßstreifen bestückten Federkörper auf, während der Förderzylinder mittels einer das Gehäuse an einem Wanddurchbruch radial durchgreifenden Tragstange an den Federkörpern aufgehängt ist. Der Federkörper kann beispielsweise als Biegebalken, Doppelbiegebalken oder Scherstange ausgebildet sein. Der Wanddurchbruch sollte zur Vermeidung einer die Messung verfälschenden Verschmutzung durch einen zwischen Stößel und Gehäusewand eingespannten Faltenbalg abgedichtet werden.

Um die beim Wägevorgang auftretenden Reibungskräfte so klein wie möglich zu halten, ist es von Vorteil, wenn der Förderzylinder an seiner einen, beschickungsseitigen Stirnseite an einem axial elastisch am Gehäuse abgestützten metallischen Gleitring radial verschiebbar abstützbar ist. Aus dem gleichen Grund sollte der Förderzylinder über eine elastisch nachgiebige Quadringdichtung mit radialem Spiel im Gehäuse gelagert werden. Eine weitere Verbesserung in dieser Hinsicht wird dadurch erzielt, daß der Förderzylinder mit seinem antriebsseitigen Ende mit axialem Spiel radial verschiebbar gegen einen Anschlagring anliegt und im Bereich seines antriebsseitigen Endes durch eine gehäusefeste Führungshülse mit radialem Spiel hindurchgreift.

Bei einer Zweizylinder-Dickstoffpumpe sind zweckmäßig zwei in einem Gehäuse mit radialem und axialem Spiel angeordnete, über Wägezellen am Gehäuse aufgehängte Förderzylinder vorgesehen, deren Förderkolben mit hydraulischen Mitteln im Gegentakt antreibbar sind.

Im folgenden wird die Erfindung anhand der Zeichnung näher erläutert. Es zeigen
- Fig. 1: eine teilweise aufgebrochene schaubildliche Darstellung einer Zweizylinder-Dickstoffpumpe;

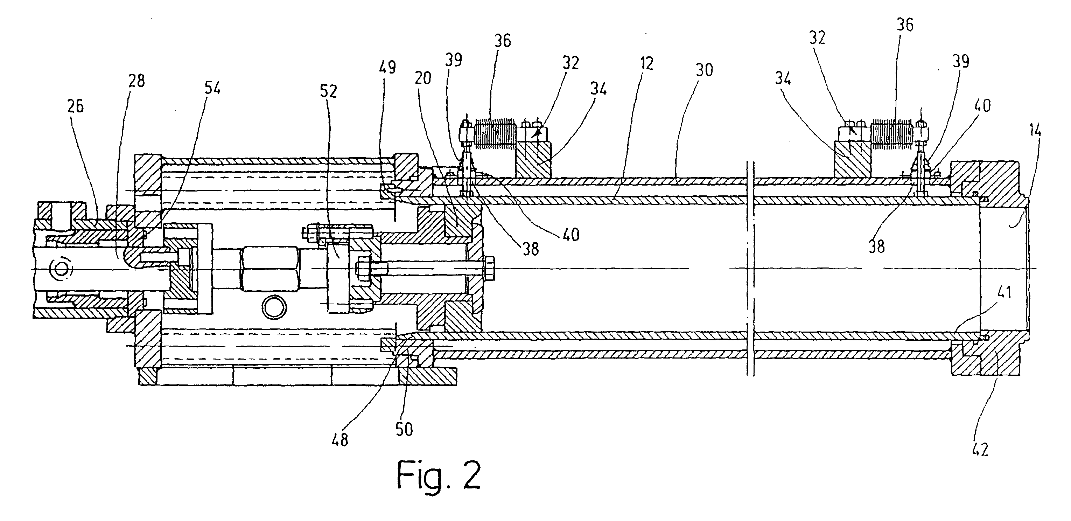

- Fig. 2: einen Schnitt durch einen schwimmend an Wägezellen aufgehängten Förderzylinder der Dickstoffpumpe nach Fig. 1;

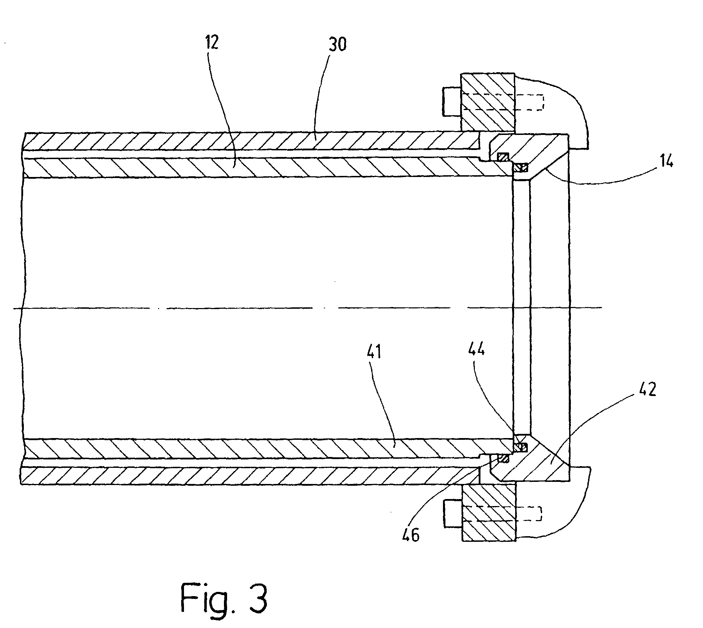

- Fig. 3: einen Ausschnitt aus dem beschickungsseitigen Ende des Förderzylinders nach Fig. 2 in vergrößerter Darstellung.

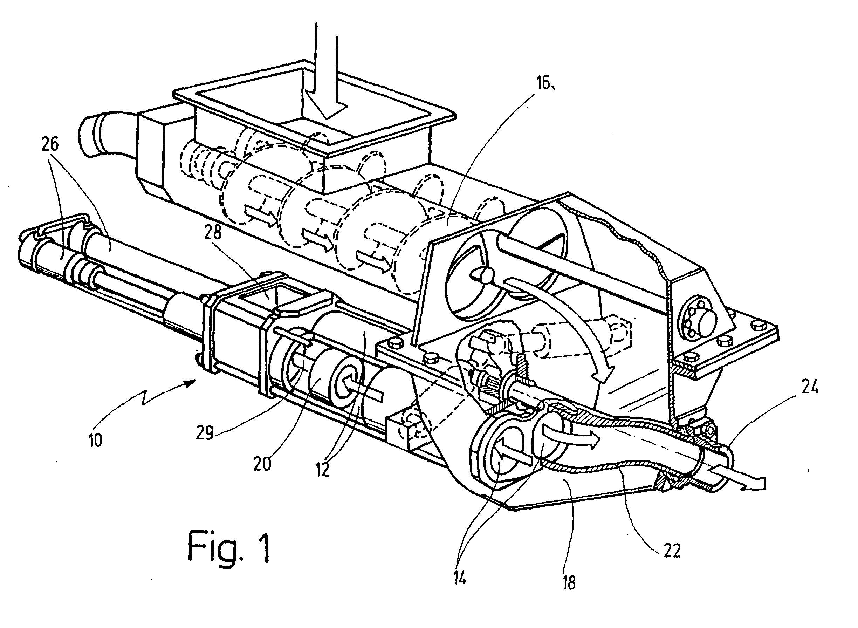

Die in Fig. 1 schematisch dargestellte Zweizylinder-Dickstoffkolbenpumpe 10 besteht im wesentlichen aus zwei Förderzylindern 12, deren stirnseitige Öffnungen 14 in einen über einen Doppelschneckenmischer 16 mit Dickstoffen beschickbaren Materialaufgabebehälter 18 münden und abwechselnd während des Druckhubs ihrer Förderkolben 20 über eine Rohrweiche 22 mit einer Förderleitung 24 verbindbar und während des Saug- oder Füllhubs des betreffenden Förderkolbens 20 unter Ansaugen von Fördergut zum Materialaufgabebehälter 18 offen sind. Die Förderkolben 20 werden über hydraulische Antriebszylinder 26 im Gegentakt angetrieben. Zwischen den Antriebszylindern 26 und den Förderzylindern 12 befindet sich ein Wasserkasten 28 zur Reinigung der zwischen den Antriebszylindern 26 und den Förderzylindern 12 hindurchgreifenden Kolbenstangen 29.

Zur Bestimmung der Fördermenge oder des Massenstroms des von den Förderzylindern 12 in die Förderleitung 24 verpumpten Förderguts sind die Förderzylinder 12 schwimmend in einem rohrförmigen Gehäuse 30 gelagert und an gehäusefest angeordneten Wägeeinrichtungen 32 aufgehängt. Die Wägeeinrichtungen 32 enthalten je ein gehäusefestes Lagerpodest 34, eine aus einem mit einem Dehnmeßstreifen bestückten, als Biegebalken ausgebildeten Federkörper bestehende Wägezelle 36 und eine am freien Ende des Biegebalkens der Wägezelle 36 gelagerte, durch einen Durchbruch 38 des Gehäuses 30 hindurchgreifende und mit ihrem anderen Ende an der Außenfläche des Förderzylinders 12 befestigte Tragstange 40. Der Durchbruch 38 ist zur Vermeidung von Verschmutzungen durch einen zwischen Tragstange 40 und Gehäuse 30 eingespannten Faltenbalg 39 abgedichtet. Der Förderzylinder 12 ist an seinem einen, beschickungsseitigen Ende 41 an einem axial elastisch an einem gehäusefesten Dichtungsträger 42 abgestützten metallischen Gleitring 44 radial verschiebbar abgestützt und über eine elastisch nachgiebige Quadringdichtung 46 mit radialem Spiel in dem Dichtungsträger 42 gelagert. An seinem antriebsseitigen Ende 48 liegt der Förderzylinder 12 mit axialem Spiel radial verschiebbar gegen einen für Montagezwecke abnehmbaren und justierbaren Anschlagring 49 an. Weiter greift der Förderzylinder 12 im Bereich seines antriebsseitigen Endes 48 durch eine gehäusefeste Führungshülse 50 mit radialem Spiel hindurch.

Um eine den Biegevorgang störende Krafteinwirkung des Förderkolbens 20 auf den Förderzylinder zu vermeiden, ist der in den Förderzylinder 12 eingreifende Teil des Förderkolbens 20 an der Verbindungsstelle 52 mit radialem Spiel mit seiner in einer gehäusefesten Führung 54 geführten Kolbenstange 29 verbunden.

Mit Hilfe der Wägezellen 36 ist es möglich, die Masse des jeweiligen Förderzylinders 12 in den beiden Endstellungen des Förderkolbens 20 sehr genau zu bestimmen und aus der Differenz der Wiegeergebnisse die jeweilige Füllmenge zu berechnen. Die so berechneten Füllmengen können unter Berücksichtigung der gleichfalls meßbaren Hubzahl oder Hubfrequenz zur Bestimmung des Massenstroms durch die Förderleitung 24 und der gesamten Fördermenge ausgewertet werden.

Zusammenfassend ist folgendes festzustellen: Die Erfindung bezieht sich auf eine Anordnung und ein Verfahren zur Bestimmung der Fördermenge oder des Massenstroms von mittels einer Kolbendickstoffpumpe 10 durch eine Förderleitung 24 transportiertem Fördergut. Die exakte Bestimmung der genannten Größen wird dadurch ermöglicht, daß der Förderzylinder 12 in einem Gehäuse 30 mit radialem und axialem Spiel angeordnet und an mindestens einer gehäusefest angeordneten Wägezelle 36 aufgehängt ist.

## Patentansprüche

1. Anordnung zur Bestimmung der Fördermenge oder des Massenstroms von mittels einer mindestens einen Förderzylinder (12) und Förderkolben (20) aufweisenden Kolbendickstoffpumpe (10) durch eine Förderleitung (24) transportiertem Fördergut, **dadurch gekennzeichnet, daß** der Förderzylinder (12) in einem Gehäuse (30) mit radialem und axialem Spiel angeordnet und an mindestens einer gehäusefest angeordneten Wägezelle (36) aufgehängt ist.

2. Anordnung nach Anspruch 1, **dadurch gekennzeichnet, daß** zumindest der im Förderzylinder (12) geführte Teil des Förderkolbens (20) relativ zum Gehäuse (30) mit radialem Spiel aufgehängt ist.

3. Anordnung nach Anspruch 2, **dadurch gekennzeichnet, daß** der Förderkolben (20) an seiner Kolbenstange mit radialem Spiel vorzugsweise kardanisch aufgehängt ist.

4. Anordnung nach Anspruch 2 oder 3, **dadurch gekennzeichnet, daß** der Förderkolben (20) gegenüber dem Gehäuse (30) oder seiner Kolbenstange (29) elastisch aufgehängt ist.

5. Anordnung nach einem der Ansprüche 1 bis 4, **dadurch gekennzeichnet, daß** das Gehäuse (30) als den Förderzylinder (12) umfassendes Rundrohr oder Mehrkantrohr ausgebildet ist.

6. Anordnung nach einem der Ansprüche 1 bis 5, **dadurch gekennzeichnet, daß** der Förderzylinder (12) innerhalb des Gehäuses (30) horizontal ausgerichtet ist und daß zwei Wägezellen (36) an der Oberseite des Gehäuses in axialem Abstand voneinander angeordnet sind.

7. Anordnung nach Anspruch 6, **dadurch gekennzeichnet, daß** die Wägezellen (36) einen an einem gehäusefesten Lagerpodest (34) angeordneten, mit einem Dehnmeßstreifen bestückten Federkörper aufweisen, und daß der Förderzylinder (12) mittels einer das Gehäuse (30) an einem Wanddurchbruch (38) durchgreifenden Tragstange (40) am Federkörper aufgehängt ist.

8. Anordnung nach Anspruch 7, **dadurch gekennzeichnet, daß** der Federkörper als Biegebalken, Doppelbiegebalken oder Scherstange ausgebildet ist.

9. Anordnung nach Anspruch 7 oder 8, **dadurch gekennzeichnet, daß** der Wanddurchbruch (38) durch einen zwischen Tragstange (40) und Gehäusewand (30) eingespannten Faltenbalg (39) abgedichtet ist.

10. Anordnung nach einem der Ansprüche 1 bis 9, **dadurch gekennzeichnet, daß** der Förderzylinder (12) an seinem einen, beschickungsseitigen Ende (41) an einem axial elastisch am Gehäuse (30) abgestützten metallischen Gleitring (44) radial verschiebbar abstützbar ist.

11. Anordnung nach einem der Ansprüche 1 bis 10, **dadurch gekennzeichnet, daß** der Förderzylinder (12) über eine elastisch nachgiebige Quadringdichtung (46) mit radialem Spiel am Gehäuse (30) gelagert ist.

12. Anordnung nach einem der Ansprüche 1 bis 11, **dadurch gekennzeichnet, daß** der Förderzylinder (12) mit seinem antriebsseitigen Ende (48) mit axialem Spiel radial verschiebbar gegen einen Anschlagring (49) anliegt.

13. Anordnung nach einem der Ansprüche 1 bis 12, **dadurch gekennzeichnet, daß** der Förderzylinder (12) im Bereich seines antriebsseitigen Endes (48) durch eine gehäusefeste Führungshülse (50) mit radialem Spiel hindurchgreift.

14. Anordnung nach einem der Ansprüche 1 bis 13, **dadurch gekennzeichnet, daß** zwei in dem Gehäuse (30) mit radialem und axialem Spiel angeordnete, über Wägezellen (36) am Gehäuse (30) aufgehängte Förderzylinder (12) vorgesehen sind, deren Förderkolben (20) mit hydraulischen Mitteln (26) im Gegentakt antreibbar sind.

15. Verfahren zur Bestimmung der Fördermenge oder des Massenstroms von mittels einer mindestens einen Förderzylinder (12) aufweisenden Kolbendickstoffpumpe (10) durch eine Förderleitung (24) gepumptem Fördergut, wobei der Förderzylinder (12) während eines Füllhubs mit Fördergut beispielsweise aus einem Materialaufgabebehälter (28) gefüllt und während eines Druckhubs unter Verdrängen des Förderguts in die Förderleitung (24) entleert wird, **dadurch gekennzeichnet, daß** der Förderzylinder (12) vor der Ausführung eines jeden Füllhubs und vor der Ausführung eines jeden Druckhubs gewogen und aus der Differenz der Wiegeergebnisse die jeweilige Füllmenge bestimmt wird und daß die Zykluszeit eines jeden Hubzyklus gemessen und unter Berücksichtigung der gemessenen Füllmengen zur rechnerischen Bestimmung der Fördermenge oder des Massenstroms ausgewertet wird.

## Claims

1. Device for determining the delivery rate or the mass flow rate of a material conveyed through a delivery conduit (24) by a high-density piston pump (10), comprising at least one conveyance cylinder (12) and conveyance piston (20), thereby **characterized**, that the conveyance cylinder (12) is provided in a housing (30) with radial and axial slack and is suspended from a weighing cell (36) provided fixed to the housing.

2. Device according to Claim 1, thereby **characterized**, that at least the part of the conveyance piston (20) introduced in the conveyance cylinder (12) is suspended with radial slack relative to the housing (30).

3. Device according to Claim 2, thereby **characterized**, that the piston rod of the conveyance piston (20) is suspended with radial slack, preferably Cardanically.

4. Device according to Claim 2 or 3, thereby **characterized**, that the conveyance piston (20) or its piston rod (29) is elastically suspended relative to the housing (30).

5. Device according to one of Claims 1 through 4, thereby **characterized**, that the housing (30) is formed as a conveyance cylinder (12) encompassing round tube or multi-sided tube.

6. Device according to one of Claims 1 through 5, thereby **characterized**, that the conveyance cylinder (12) within the housing (30) is oriented horizontally and that two weighing cells (36) are provided on the upper side the housing with axial separation from each other.

7. Device according to Claim 6, thereby **characterized**, that the weighing cells (36) are provided on a housing fixed mounting platform (34), and include a stress measuring strip armed spring body, and that the conveyance cylinder (12) is suspended from the spring body by a carrier rod (40) which extends through a wall aperture (38) of the housing (30).

8. Device according to Claim 7, thereby **characterized**, that the spring body is formed as a transverse beam, double transverse beam or shear beam.

9. Device according to Claim 7 or 8, thereby **characterized**, that the wall aperture (38) is sealed by a bellows seal (39) mounted under tension between carrier rod (40) and housing wall (30).

10. Device according to one of Claims 1 through 9, thereby **characterized**, that the conveyance cylinder (12) on its load end (41) is radially displaceably supportable on a metallic slide ring (44) which is supported axially elastically in the housing (30).

11. Device according to one of Claims 1 through 10, thereby **characterized**, that the conveyance cylinder (12) is mounted on the housing (30) with radial slack via an elastic yieldable quad-ring seal (46).

12. Device according to one of Claims 1 through 11, thereby **characterized**, that the conveyance cylinder (12) lies with its drive side end (48) with axial slack radially slideable against an abutment or stop ring (49).

13. Device according to one of Claims 1 through 12, thereby **characterized**, that the conveyance cylinder (12) in the area of its drive side end (48) extends through a housing fixed guide jacket (50) with radial slack.

14. Device according to one of Claims 1 through 13, thereby **characterized**, that two conveyance cylinders (12) are provided in the housing (30) with radial and axial slack, suspended via weighing cells (36) in the housing (30), of which the conveyance pistons (20) are driveable in push pull or opposing phase manner by hydraulic means (26).

15. Process for determining the delivery rate or the mass flow rate of a material conveyed through a delivery conduit (24) by a high-density piston pump (10) comprising at least one conveyance cylinder (12) and conveyance piston (20), wherein during a filling stroke (suction stroke) the conveyance cylinder is filled with a material, for example, from a material providing container, and during a pressure stroke, with displacement, the material is emptied into the delivery conduit (24), thereby **characterized**, that the conveyance cylinder (12) is weighed prior to the carrying out of each respective fill stroke and prior to the carrying out of each respective pressure stroke, that the respective fill amounts are calculated from the differential in the weight values, and that the cycle time of each respective stroke cycle is measured, and that by taking into consideration the measured fill amounts the mathematical computation of the delivery rate or the mass flow rate is calculated.

## Revendications

1. Dispositif pour déterminer le débit ou le débit massique d'une matière transportée à travers une conduite (24) au moyen d'une pompe pour liquides épais (10) présentant au moins un cylindre (12) et un piston (20), **caractérisé en ce que** le cylindre (12) est disposé dans un carter (30) avec un jeu radial et axial, et est suspendu à au moins une cellule de pesage (36) disposée fixement sur le carter.

2. Dispositif selon la revendication 1, **caractérisé en ce qu'**au moins la partie du piston (20) qui est guidée dans le cylindre (12) est suspendue avec un jeu radial par rapport au carter (30).

3. Dispositif selon la revendication 2, **caractérisé en ce que** le piston (20) est suspendu par sa tige avec un jeu radial de préférence à la Cardan.

4. Dispositif selon la revendication 2 ou 3, **caractérisé en ce que** le piston (20) est suspendu de manière élastique par rapport au carter (30) ou à sa tige (29).

5. Dispositif selon l'une des revendications 1 à 4, **caractérisé en ce que** le carter (30) est réalisé en tant que tube rond ou polygonal entourant le cylindre (12).

6. Dispositif selon l'une des revendications 1 à 5, **caractérisé en ce que** le cylindre (12) est orienté horizontalement à l'intérieur du carter (30), et **en ce que** deux cellules de pesage (36) sont disposées avec un écartement axial sur le dessus du carter.

7. Dispositif selon la revendication 6, **caractérisé en ce que** les cellules de pesage (36) présentent un élément à ressort disposé sur un socle (34) solidaire du carter et muni d'une bande de mesure de l'allongement, et **en ce que** le cylindre (12) est suspendu à l'élément à ressort au moyen d'une barre de support (40) passant à travers le carter (30) au niveau d'un passage dans la paroi (38).

8. Dispositif selon la revendication 7, **caractérisé en ce que** l'élément à ressort est réalisé en tant que poutre de flexion, double poutre de flexion ou barre de cisaillement.

9. Dispositif selon la revendication 7 ou 8, **caractérisé en ce que** le passage de la paroi (38) est étanché par un soufflet (39) serré entre la barre de support (40) et la paroi de carter (30).

10. Dispositif selon l'une des revendications 1 à 9, **caractérisé en ce que** le cylindre (12) peut prendre appui avec son extrémité (41) située côté alimentation sur une bague de glissement (44) métallique prenant appui sur le carter (30) de manière élastique dans la direction axiale, de façon à pouvoir coulisser radialement.

11. Dispositif selon l'une des revendications 1 à 10, **caractérisé en ce que** le cylindre (12) est monté dans le carter (30) avec un jeu radial par l'intermédiaire d'une bague d'étanchéité élastique de section carrée (46).

12. Dispositif selon l'une des revendications 1 à 11, **caractérisé en ce que** le cylindre (12) est appliqué avec un jeu axial avec son extrémité située côté moteur (48) contre une bague de butée (49) de façon à être mobile radialement.

13. Dispositif selon l'une des révendications 1 à 12, **caractérisé en ce que** le cylindre traverse avec un jeu radial, dans la zone de son extrémité située côté moteur (48), une douille de guidage (50) solidaire du carter.

14. Dispositif selon l'une des revendications 1 à 13, **caractérisé en ce que** sont prévus deux cylindres (12) disposés dans le carter (30) avec un jeu axial et radial et suspendus au carter (30) par le biais de cellules de pesage (36), dont les pistons (20) peuvent être entraînés à contretemps par des moyens hydrauliques (26).

15. Procédé pour déterminer le débit ou le débit massique d'une matière transportée à travers une conduite (24) au moyen d'une pompe pour liquides épais (10) présentant au moins un cylindre (12), sachant que, pendant une course de remplissage, le cylindre (12) se remplit d'une matière provenant par exemple d'un réservoir de matières (28), et pendant une course de compression, il se vide dans la conduite (24), **caractérisé en ce qu'**avant d'effectuer chaque course de remplissage et chaque course de compression, le cylindre (12) est pesé et qu'à partir de la différence des résultats de pesage, on détermine la contenance, et **en ce que** la durée de chaque cycle de courses est mesurée et est utilisée en tenant compte des contenances mesurées pour déterminer mathématiquement le débit ou le débit massique.
